# EUROPEAN PATENT SPECIFICATION

(11) **EP 3 364 652 B1**
(45) Date of publication and mention of the grant of the patent: **21.07.2021**
(21) Application number: 17157226.6
(22) Date of filing: 21.02.2017
(51) Int. Cl.: H04N 13/393, G02B 30/54

(54) **DISPLAY SYSTEM AND DISPLAY METHOD**
ANZEIGESYSTEM UND ANZEIGEVERFAHREN
SYSTÈME D'AFFICHAGE ET PROCÉDÉ D'AFFICHAGE

(43) Date of publication of application: 22.08.2018
(73) Proprietor: Vestel Elektronik Sanayi ve Ticaret A.S., 45030 Manisa (TR); Özyegin Üniversitesi, 34794 Çekmeköy/ Istanbul (TR)
(72) Inventor: GULBAHAR, Burhan, 45030 Manisa (TR); MEMISOGLU, Gorkem, 45030 Manisa (TR)
(74) Representative: Kehl, Ascherl, Liebhoff & Ettmayr Patentanwälte Partnerschaft mbB

(56) References cited:
- EP-A1- 2 333 640
- EP-A1- 2 822 281
- US-A- 5 793 918
- JASON ALEXANDER ET AL: "Tilt displays : designing display surfaces with multi-axis tilting and actuation", PROCEEDINGS OF THE 14TH INTERNATIONAL CONFERENCE ON HUMAN-COMPUTER INTERACTION WITH MOBILE DEVICES AND SERVICES, MOBILEHCI '12, 24 September 2012 (2012-09-24), page 161, XP055393441, New York, New York, USA DOI: 10.1145/2371574.2371600 ISBN: 978-1-4503-1105-2
- NAOYA ISOYAMA ET AL: "Multi-tiles", ADVANCES IN MOBILE COMPUTING AND MULTIMEDIA, ACM, 2 PENN PLAZA, SUITE 701 NEW YORK NY 10121-0701 USA, 11 December 2015 (2015-12-11), pages 14-18, XP058078984, DOI: 10.1145/2837126.2837165 ISBN: 978-1-4503-3493-8
- JOHN HARDY ET AL: "ShapeClip", HUMAN FACTORS IN COMPUTING SYSTEMS, ACM, 2 PENN PLAZA, SUITE 701 NEW YORK NY 10121-0701 USA, 18 April 2015 (2015-04-18), pages 19-28, XP058068486, DOI: 10.1145/2702123.2702599 ISBN: 978-1-4503-3145-6

## Description

### TECHNICAL FIELD

The invention relates to a display system and a corresponding display method.

### BACKGROUND

The present invention will mainly be described in conjunction with live display of moving three dimensional objects. It is however understood, that the present invention may also be used to display static content.

The displaying of three dimensional content is generally used e.g. in computer animation or movie CGI effects. Until recently such three dimensional content was usually displayed on two dimensional display devices.

To increase immersion for the users, lately three dimensional displays have been developed. Such three dimensional displays provide distinct images for the left and right eyes of the users and therefore create a three dimensional illusion for the users.

However, such displays are usually flat panel displays, like e.g. TV sets or cinema screens. The user must usually sit on a fixed or limited position in front of the screen to experience the three dimensional effect. Further, the user may not walk around the object.

To further improve the user immersion, so called head mounted displays have been developed, which while displaying a three dimensional image to the user also monitor any movement of the user. A corresponding PC may then provide the three dimensional content in real time. A user may e.g. walk around in a building or walk around objects.

However, any of the known methods only provide illusions to the users, that either require specific positions or a dedicated hardware, like a headset.

Document "Tilt Displays: Designing Display Surfaces with Multi-axis Tilting and Actuation" by Jason Alexander et al. discloses a display with multiple display devices that are arranged in a common plane and may be moved vertically or may be tilted.

Document EP 2 333 640 A1 discloses a method for adaptively changing a viewport on a display of a mobile device based on a viewing angle.

Document "Multi-tiles: a System for Information Presentation using Divided Rotatable Screens" describes a projection screen with single rotatable screen elements.

Document "ShapeClip: Towards Rapid Prototyping with Shape- Changing Displays for Designers" by John Hardy et al. discloses a display which changes its shape.

Accordingly, there is a need for an improved three dimensional display.

### SUMMARY

The present invention provides a display system with the features of claim 1 and a display method with the features of claim 8.

The present invention is based on the finding that traditional methods of displaying objects in three dimensions do not provide a satisfactory result and have very limited possibilities. For example it is not possible to walk around the object or touch the object.

The present invention takes into account this deficiencies and provides a display system with display units that can each be positioned independently. The motion device may be any mechanical arrangement that allows individually moving and positioning the single display units.

The motion device will therefore mimic the shape of the three dimensional object with the plurality of display units. That means that the motion device positions the single display units such that they follow the shape of the three dimensional object. Even without any image data showing on the display units, the shape of the three dimensional object will therefore be visible at least in an approximated form. It is understood, that the number and size of the display units determines the amount of details that may be formed by positioning the display units.

After the single display units are positioned by the motion device, the image controller will then provide respective image data to the display units that is based on an image of the three dimensional object. However, the image controller will not display an image of the three dimensional object on every display unit. Instead, the image controller will only display sections of the image on the display units.

The image controller will choose the section of the image that is displayed on a single display unit according to the position of the display unit. The section that is displayed on a display unit will therefore correspond to the section of the three dimensional object that is represented by the position and size of the respective display unit.

In contrast to common 3D displays with the present invention the object is formed or reproduced at least approximately in reality to improve the visual three dimensional effect and furthermore a user may touch the object or the user may walk around the object.

Further embodiments of the present invention are subject of the further subclaims and of the following description, referring to the drawings.

In one embodiment, the display system may comprise a motion controller, which may be configured to adapt the position and/or orientation of the single display units by controlling the motion device based on a three dimensional model of the three dimensional object.

By moving the single display units according to a three dimensional model of the three dimensional object, the shape of the three dimensional object may easily be rebuilt locally with the single display units. The display units may e.g. be positioned such that the normal of the plane of the display unit is parallel or lies on the normal of the respective section of the three dimensional model.

The motion device may e.g. comprise a plurality of single arm-like arrangements that each carry a single or a plurality of display units. Further, every display unit may be pivotably mounted on the respective arm. Such arms may e.g. be provided on a pole or rod and may therefore cover a 360° angle around the pole.

However, such arms may also be mounted on a wall. In that case, the display unit will then only show one side of the three dimensional object, e.g. as a kind of relief.

As an alternative, the motion device may also comprise a matrix of horizontally and vertically movable slides or the like. However, the above mentioned arms may be mounted on such slides.

In one embodiment, the motion controller may be configured to calculate for a section of the three dimensional model that corresponds to the section represented by a respective one of the display units an average orientation and control the motion device to position the respective display unit accordingly.

Every display unit will represent and display a specific section of the three dimensional object. It is obvious that the smaller the display units are chosen the more details may be modelled. However, it may become impractical to move a large number of display units if the display units become too small. Therefore, every display unit may represent a predefined section of the three dimensional object.

For example display units with a width of 4,9 inch and a height of 3,0 inch may be used. Such display units may, without any scaling by the image controller, represent a section of the surface of the three dimensional object of the same size.

Calculating a mean orientation of the respective section will provide an approximation of the orientation of the entire section of the three dimensional object that will be shown on the respective display unit. If only one surface point of the three dimensional model would be used to determine the orientation of the respective display unit, the orientation of that surface point might strongly deviate from such a mean value.

In another embodiment, the display units may comprise display units of different sizes. If display units of different sizes are used, more detailed regions of the three dimensional object may be represented by smaller display units and regions of less details may be represented by larger display units.

For example, larger display units may be used to represent the legs, the arms or the torso of a person. Smaller display units may in contrast be used to represent the face, hands or any other detailed section of the person.

In one embodiment, the image controller may be configured to display on each one of the display units a respective section of the image of the three dimensional object that corresponds to the position of the respective display unit.

The display controller may be in communication with the motion device and know the sizes and orientations of the single display units. At the same time, the image of the three dimensional object may be provided as a texture for the three dimensional model.

The image controller may therefore cut out from the complete image or texture of the three dimensional object the respective section of the texture for each display unit and display that section on the respective display unit.

The image controller may also use the three dimensional model and display the section of the image of the three dimensional object as an overlay over the respective section of the three dimensional model. The image controller may further use additional techniques like e.g. displacement mapping or the like to enhance the quality of displaying the three dimensional object.

This means that the image controller may perform some kind of three dimensional rendering and that not only flat images may be displayed on the single display units.

In one embodiment, the display system may comprise a tracking device that may be configured to track a position of eyes of a user of the display system, wherein the image controller may be configured to adapt the displayed image for every display unit according to the position of the user's eyes.

The image controller may e.g. render the section of the three dimensional model and the respective image according to a viewing direction of the user for every single display unit. This will further improve the quality of the displayed object and provide a more realistic display.

In one embodiment, the display system may comprise a memory configured to store a plurality of three dimensional models and/or images of the respective three dimensional objects.

If the three dimensional models are pre-stored in the display system, there is no need to transmit them every time an object should be displayed. The stored three dimensional models can then simply be loaded and the respective image may be displayed.

In another embodiment, the display system may comprise a communication interface configured to receive the three dimensional model and/or the image of the three dimensional object.

With a communication interface data of the three dimensional object, e.g. the three dimensional model and the respective images, may be received in real time. This will allow e.g. to perform live video calls or any other type of live transmission with the display system.

It is also possible to combine stored information with live information that is transmitted via the communication interface. It is possible for example to transmit only sections of the three dimensional object that change constantly. In an exemplary video conference, for example only live data regarding the face of the person that is performing the video conference may be transmitted, while the torso, arms and legs may be a standard male or female model, or any other avatar-like model, that is then combined with the live data.

In one embodiment, the display system may comprise a three dimensional scanner, which may be configured to scan a further three dimensional object and provide a respective further three dimensional model. As an alternative or in addition the display system may comprise a camera system, which may be configured to record a further image of the further three dimensional object.

The display system may easily be extended to serve as a bi-directional conferencing system by providing two display systems in two remote places, and every display system with a three dimensional scanner and/or a camera. The scanned data of a local user may then be transmitted via a data network to the other display system and may there be displayed to the remote user and vice versa.

### BRIEF DESCRIPTION OF THE DRAWINGS

For a more complete understanding of the present invention and advantages thereof, reference is now made to the following description taken in conjunction with the accompanying drawings. The invention is explained in more detail below using exemplary embodiments which are specified in the schematic figures of the drawings, in which:
- Fig. 1: shows a block diagram of an embodiment of a display system according to the present invention;
- Fig. 2: shows a block diagram of another embodiment of a display system according to the present invention;
- Fig. 3: shows a block diagram of another embodiment of a display system according to the present invention;
- Fig. 4: shows a block diagram of an embodiment of a display method according to the present invention; and
- Fig. 5: shows a block diagram of another embodiment of a display method according to the present invention.

In the figures like reference signs denote like elements unless stated otherwise.

### DETAILED DESCRIPTION OF THE DRAWINGS

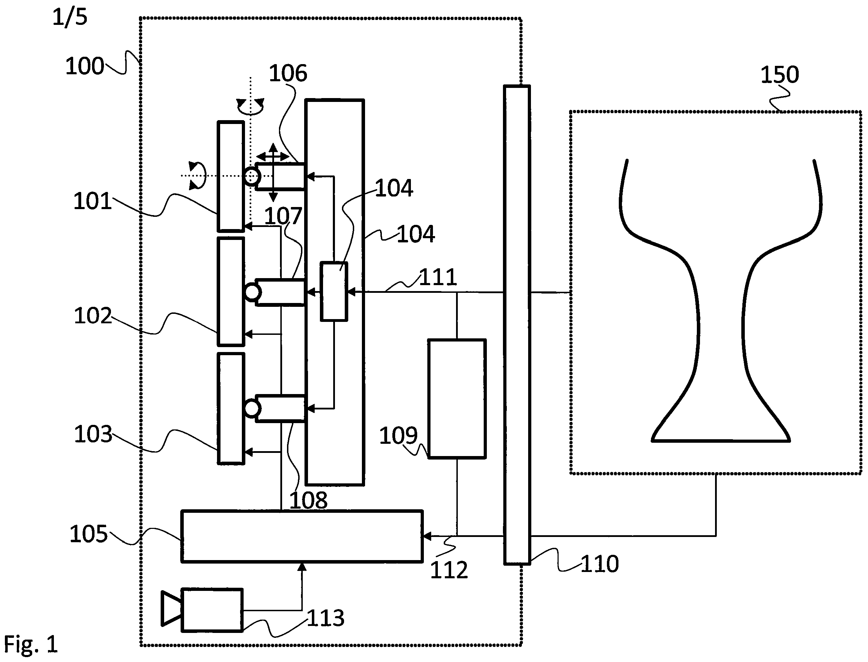

Fig. 1 shows a block diagram of a display system 100. The display system 100 can be used to display or better recreate the three dimensional object 150. The display system 100 comprises a plurality of display units 101, 102, 103, of which only three are exemplarily shown. It is understood that any number of display units may be provided.

The display units 101, 102, 103 are mechanically coupled to a motion device 104 and are further electrically coupled to an image controller 105. The motion device 104 comprises movement arms 106, 107, 108 for the display units 101, 102, 103. The movement arms 106, 107, 108 are capable of moving up and down and extend in length. Further, the display units 101, 102, 103 may be pivotably moveable on the movement arms 106, 107, 108 with the help of a ball or spherical joint.

The motion device 104 may e.g. comprise electric motors (not explicitly shown) and respective motor drivers to move the movement arms 106, 107, 108 and position the display units 101, 102, 103 accordingly.

The display system 100 further comprises an optional memory 109 and an optional communication interface 110. The memory 109 and the communication interface 110 may be used to provide the motion device 104 and the image controller 105 with a three dimensional model 111 of the three dimensional object 150 and with an image 112 of the three dimensional object 150. It is understood, that any other means for providing the three dimensional model 111 and the image 112 may be used, like e.g. a USB stick.

After receiving the three dimensional model 111, a motion controller 114 of the motion device 104 can move the single display units 101, 102, 103 according to the shape of the three dimensional object 150. The single display units 101, 102, 103 will therefore mimic or recreate the outer contour of the three dimensional object 150. The motion controller 114 may e.g. calculate for a section of the three dimensional model 111 that corresponds to the section represented by a respective one of the display units 101, 102, 103 an average orientation and control position of the respective display unit 101, 102, 103 accordingly.

At the same time the image controller 105 may provide the display units 101, 102, 103 with the respective sections of the image 112, which represent the section of the original three dimensional object 150 that is represented by the respective display units 101, 102, 103. That means that every one of the display units 101, 102, 103 will show a section of an image of the three dimensional object 150 that exactly matches the position of the respective display units 101, 102, 103 when projected onto the three dimensional object 150.

The display system 100 further comprises an optional tracking device 113. The tracking device 113 may track a position of eyes of a user of the display system 100. The image controller 105 may then adapt the displayed image 112 for every display unit 101, 102, 103 according to the position of the user's eyes.

It is understood, that although shown as a vase, the three dimensional object 150 may be any static or moving three dimensional object. Further, movements of the three dimensional object 150 may be transmitted via the communication interface 110 in real time, i.e. as fast as possible, from a position where the three dimensional object 150 may be scanned to the position where the display system 100 is located. This allows using the display system 100 to perform video calls.

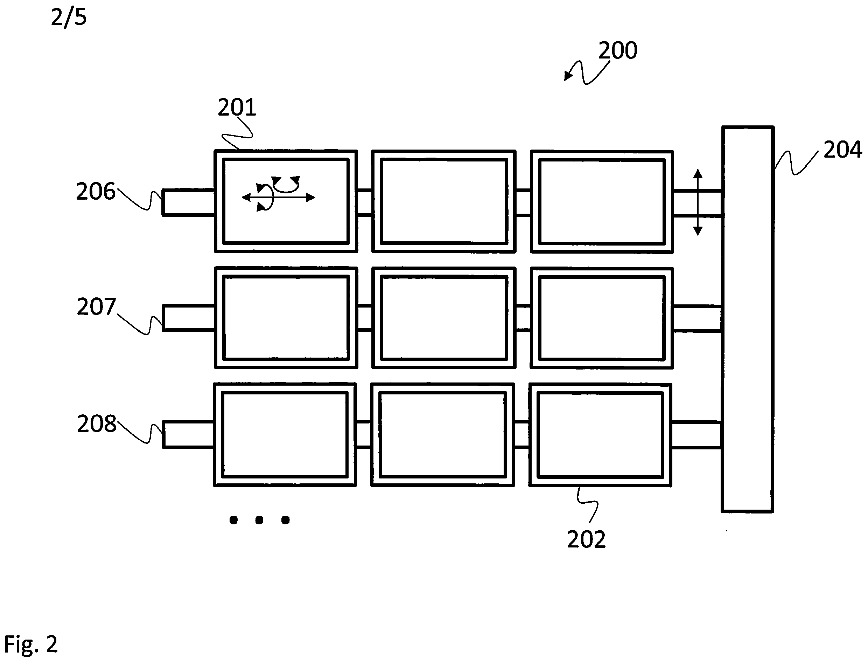

Fig. 2 shows a block diagram of a display system 200. The display system 200 may comprise the same elements as the display system 100. In Fig. 2 the focus lies on explaining an alternative motion device 204. The display system 200 is just exemplarily shown with nine display units 201, 202, of which for sake of clarity only the first and the last are provided with reference signs.

The motion device 204 comprises three movement arms 206, 207, 208, which are parallel to each other and each carry a plurality of display units 201, 202. The movement arms 206, 207, 208 themselves may move upwards and downwards. It is understood, that such a movement of the movement arms 206, 207, 208 will also move the respective display units 201, 202 upwards or downwards.

At the same time, the display units 201, 202 may move sideways on the movement arms 206, 207, 208. This already allows to move the display units 201, 202 in two dimensions. However, the display units 201, 202 may further be pivotably mounted and may therefore be tilted in any direction.

With the arrangement of Fig. 2 a relief-like 3D display of a three dimensional object is possible. It is however understood that the arrangement shown in Fig. 2 may be just a subsection of the display system 200. In one example, a plurality of arrangements as shown in Fig. 2 may e.g. be provided side by side in a ring or hexagon like arrangement. This would allow displaying a real three dimensional object from all sides.

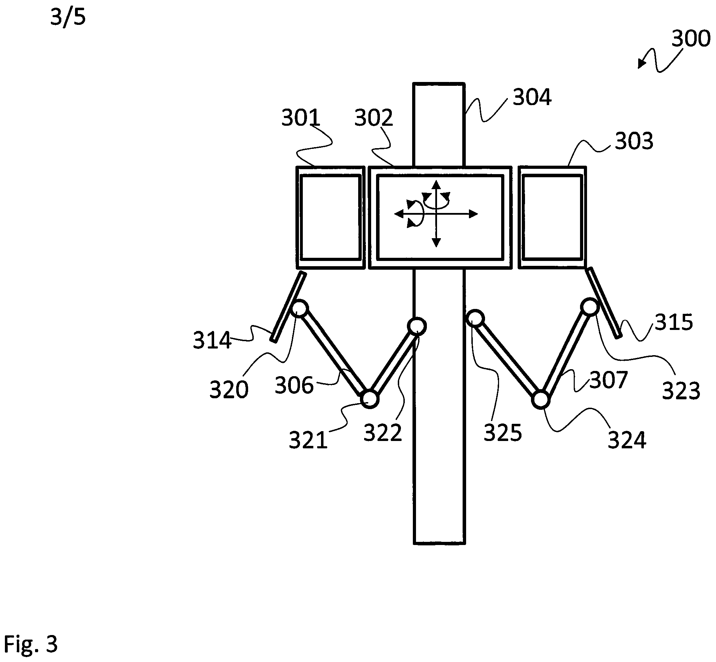

Fig. 3 shows a block diagram of a display system 300. The display system 300 provides an alternative mechanical arrangement for moving the single display units 301, 302, 303, 314, 315. For ease of understanding, some of the display units have been omitted, such that the mechanical structure beneath the display units becomes visible. It is however, understood, that the display system 300 may comprise further display units that cover the mechanical arrangements.

In the display system 300 the display units 301, 302, 303, 314, 315 are each supported by a mechanical three joint arm 306, 307. Every one of the arms has a joint 320, 323 coupled to the respective display unit 301, 302, 303, 314, 315, a center joint 321, 324, and a joint 322, 325 that couples the arm to the motion device 304.

It is understood, that the arrangement is just exemplarily shown and that any other arrangement that allows the required movements is possible. The single arms 306, 307 may also be moveable up and down on the motion device 304 or rotate around the motion device 304.

The joints 320 - 325 may be ball or spherical joints and may therefore allow a pivot motion of the display units 301, 302, 303, 314, 315.

The arrangement shown regarding display system 300 allows completely recreating three dimensional objects without being limited to only one side.

For sake of clarity the reference signs used above in conjunction with the apparatus-based figures will also be used below to explain the method-based figures.

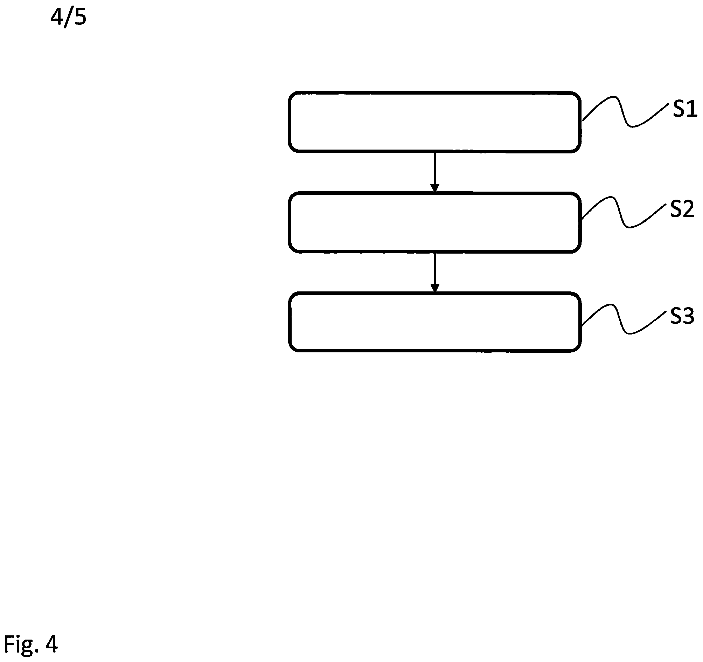

Fig. 4 shows a block diagram of an embodiment of a display method for displaying a three dimensional object 150.

The display method comprises mechanically positioning S1 a plurality display units 101 - 103, 201, 202, 301 - 303, 314, 315 according to a shape of the three dimensional object 150.

The method also comprises electronically contacting S2 the display units (101 - 103, 201, 202, 301 - 303, 314, 315, and displaying S3 an image 112 of the three dimensional object 150 on the display units 101 - 103, 201, 202, 301 - 303, 314, 315.

The method may e.g. be used to recreate the contour or shape of the three dimensional object 150 with the display units 101 - 103, 201, 202, 301 - 303, 314, 315. This will allow a user to walk around the recreated three dimensional object 150 and touch the recreated three dimensional object 150.

It is understood, that the display units 101 - 103, 201, 202, 301 - 303, 314, 315 may comprise display units 101 - 103, 201, 202, 301 - 303, 314, 315 of different sizes.

The method may also comprise storing a plurality of three dimensional models 111 and/or images 112 of the respective three dimensional objects 150. These three dimensional models 111 and/or images 112 may then be used to recreate the respective three dimensional objects 150, even without an online data connection.

As an alternative or in addition, the three dimensional model 111 and/or the image 112 of the three dimensional object 150 may also be received via a communication interface 110.

Further, if a bidirectional communication should be provided, the method may also comprise scanning a further three dimensional object, and provide a respective further three dimensional model 111, and recording an image of the further three dimensional object. Such a further three dimensional object may e.g. be a user that wants to perform a video chat.

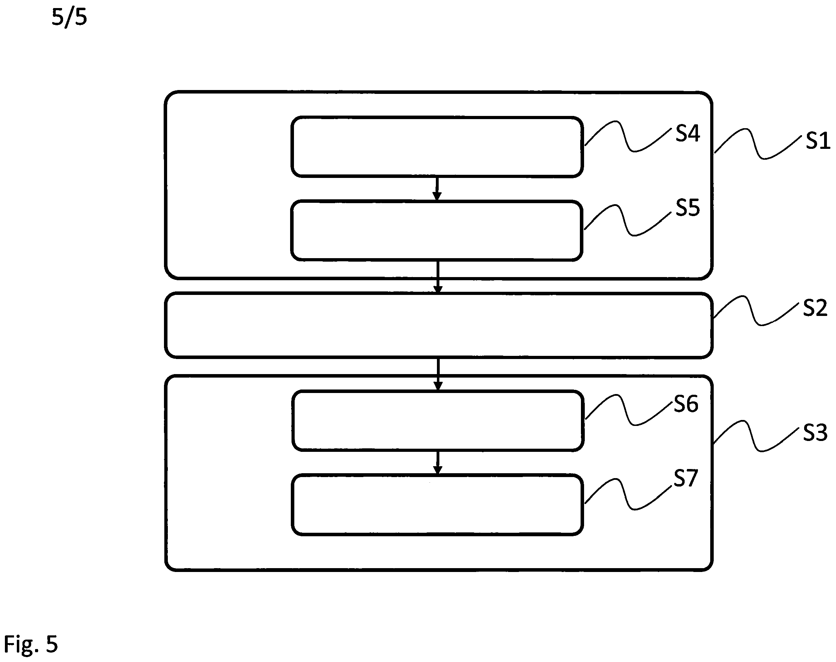

Fig. 5 shows a block diagram of another embodiment of a display method. The display method of Fig. 5 is based on the display method of Fig. 4.

However, the step of mechanically positioning S1 comprises adapting S4 the position and/or orientation of the single display units 101 - 103, 201, 202, 301 - 303, 314, 315 based on a three dimensional model 111 of the three dimensional object 150. Further, mechanically positioning S1 comprises calculating S5 for a section of the three dimensional model 111 that corresponds to the section represented by a respective one of the display units 101 - 103, 201, 202, 301 - 303, 314, 315 an average orientation and positioning the respective display unit 101 - 103, 201, 202, 301 - 303, 314, 315 accordingly.

Further, displaying S3 comprises displaying S6 on each one of the display units 101 - 103, 201, 202, 301 - 303, 314, 315 a respective section of the image 112 of the three dimensional object 150 that corresponds to the position of the respective display unit 101 - 103, 201, 202, 301 - 303, 314, 315.

Finally, displaying may comprise tracking S7 a position of eyes of a user, and adapting the displayed image 112 for every display unit 101 - 103, 201, 202, 301 - 303, 314, 315 according to the position of the user's eyes.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

The present invention provides a display system 100, 200, 300 for displaying a three dimensional object 150, the display system 100, 200, 300 comprising a plurality of display units 101 - 103, 201, 202, 301 - 303, 314, 315, a motion device 104, 204, 304, which is mechanically coupled to the display units 101 - 103, 201, 202, 301 - 303, 314, 315 and is configured to position the display units 101 - 103, 201, 202, 301 - 303, 314, 315 according to a shape of the three dimensional object 150, and an image controller 105, which is electronically coupled to the display units 101 - 103, 201, 202, 301 - 303, 314, 315 and is configured to display an image 112 of the three dimensional object 150 on the display units 101 - 103, 201, 202, 301 - 303, 314, 315. The present invention further provides a respective display method.

### List of reference signs

- 100, 200, 300: display system
- 101 - 103, 201, 202, 301 - 303, 314, 315: display unit
- 104, 204, 304: motion device
- 105: image controller
- 106 - 108, 206 - 208, 306, 307: movement arm
- 109: memory
- 110: communication interface
- 111: three dimensional model
- 112: image
- 113: tracking device
- 114: motion controller

- 320, 321, 322, 323, 324, 325: joint

- 150: three dimensional object

- S1 - S7: method actions

## Claims

1. Display system (100, 200, 300) for displaying a three dimensional object (150), the display system (100, 200, 300) comprising:
a plurality of display units (101 - 103, 201, 202, 301 - 303, 314, 315),
a motion device (104, 204, 304), which is mechanically coupled to the display units (101 - 103, 201, 202, 301 - 303, 314, 315) and comprises a pole and a plurality of single arms (306, 307) each for every one
of the display units (101 - 103, 201, 202, 301 - 303, 314, 315) that is coupled to the pole and that is moveable up and down on the motion device (104, 204, 304) and that is rotatable around the motion device (104, 204, 304) covering a 360° angle around the pole, wherein each of the plurality of single arms (306, 307) is configured as a mechanical three joint arm (306, 307), each comprising a first joint (320, 323) coupled to the respective display unit (301, 302, 303, 314, 315), and a center joint (321, 324), and a second joint (322, 325) that couples each single arm to the motion device (304),
a motion controller (114), which is configured to adapt the position and/or orientation of the single display units (101 - 103, 201, 202, 301 - 303, 314, 315) by controlling the motion device (104, 204, 304) based on a three dimensional model (111) of the three dimensional object (150), and
an image controller (105), which is electronically coupled to the display units (101 - 103, 201, 202, 301 - 303, 314, 315) and is configured to display a section of an image (112) of the three dimensional object (150) on each one of the display units (101 - 103, 201, 202, 301 - 303, 314, 315).

2. Display system (100, 200, 300) according to claim 1, wherein the motion controller (114) is configured to calculate for a section of the three dimensional model (111) that corresponds to the section represented by a respective one of the display units (101 - 103, 201, 202, 301 - 303, 314, 315) an average orientation, and control the motion device (104, 204, 304) to position the respective display unit (101 - 103, 201, 202, 301 - 303, 314, 315) accordingly.

3. Display system (100, 200, 300) according to any one of the preceding claims, wherein the display units (101 - 103, 201, 202, 301 - 303, 314, 315) comprise display units (101 - 103, 201, 202, 301 - 303, 314, 315) of different sizes.

4. Display system (100, 200, 300) according to any one of the preceding claims, wherein the image controller (105) is configured to display on each one of the display units (101 - 103, 201, 202, 301 - 303, 314, 315) the respective section of the image (112) of the three dimensional object (150) that corresponds to the position of the respective display unit (101 - 103, 201, 202, 301 - 303, 314, 315).

5. Display system (100, 200, 300) according to any one of the preceding claims, comprising a tracking device (113) that is configured to track a position of eyes of a user of the display system (100, 200, 300), wherein the image controller (105) is configured to adapt the displayed image (112) for every display unit (101 - 103, 201, 202, 301 - 303, 314, 315) according to the position of the user's eyes.

6. Display system (100, 200, 300) according to any one of the preceding claims, comprising a memory (109) configured to store a plurality of three dimensional models (111) and/or images (112) of the respective three dimensional objects (150); and/or
comprising a communication interface (110) configured to receive the three dimensional model (111) and/or the image (112) of the three dimensional object (150).

7. Display system (100, 200, 300) according to any one of the preceding claims, comprising a three dimensional scanner, which is configured to scan a further three dimensional object (150) and provide a respective further three dimensional model (111), and/or
camera system, which is configured to record a further image of the further three dimensional object (150).

8. Display method for displaying a three dimensional object (150), the display method comprising:
mechanically positioning (S1) a plurality of display units (101 - 103, 201, 202, 301 - 303, 314 315) according to a shape of a three dimensional object (150), wherein mechanically positioning (S1) comprises adapting (S4) the position and/or orientation of the plurality of display units (101 - 103, 201, 202, 301 - 303, 314, 315) based on a three dimensional model (111) of the three dimensional object (150) with a plurality of single arms (306, 307) each for every one of the display units (101 - 103, 201, 202, 301 - 303, 314, 315) that is coupled to a pole of a motion device (104, 204, 304) and that is moveable up and down on the motion device (104, 204, 304) and that is rotatable around the motion device (104, 204, 304) covering a 360° angle around the pole, wherein each of the plurality of single arms (306, 307) is configured as a mechanical three joint arm (306, 307), each comprising a first joint (320, 323) coupled to the respective display unit (301, 302, 303, 314, 315) and a center joint (321, 324), and a second joint (322, 325) that couples each single arm to the motion device (304),
electronically contacting (S2) the display units (101 - 103, 201, 202, 301 - 303, 314, 315), and displaying (S3) a section of an image (112) of the three dimensional object (150) on each one of the display units (101 - 103, 201, 202, 301 - 303, 314, 315).

9. Display method according to claim 8, wherein mechanically positioning comprises calculating (S5) for a section of the three dimensional model (111) that corresponds to the section represented by a respective one of the display units (101 - 103, 201, 202, 301 - 303, 314, 315) an average orientation and positioning the respective display unit (101 - 103, 201, 202, 301 - 303, 314, 315) accordingly.

10. Display method according to any one of the preceding claims 8 and 9, wherein the display units (101 - 103, 201, 202, 301 - 303, 314, 315) comprise display units (101 - 103, 201, 202, 301 - 303, 314, 315) of different sizes; and/or
wherein displaying comprises displaying (S6) on each one of the display units (101 - 103, 201, 202, 301 - 303, 314, 315) the respective section of the image (112) of the three dimensional object (150) that corresponds to the position of the respective display unit (101 - 103, 201, 202, 301 - 303, 314, 315).

11. Display method according to any one of the preceding claims 8 to 10, comprising tracking (S7) a position of eyes of a user, and adapting the displayed image (112) for every display unit (101 - 103, 201, 202, 301 - 303, 314, 315) according to the position of the user's eyes.

12. Display method according to any one of the preceding claims 8 to 11, comprising storing a plurality of three dimensional models (111) and/or images (112) of the respective three dimensional objects (150); and/or
receiving the three dimensional model (111) and/or the image (112) of the three dimensional object (150) via a communication interface (110).

13. Display method according to any one of the preceding claims 8 to 12, comprising scanning a further three dimensional object (150) and provide a respective further three dimensional model (111), and/or
recording an image of the further three dimensional object (150).

## Patentansprüche

1. Anzeigesystem (100, 200, 300) zum Darstellen eines dreidimensionalen Objekts (150), wobei das Anzeigesystem (100, 200, 300) aufweist:
eine Vielzahl von Anzeigeeinheiten (101 - 103, 201, 202, 301 - 303, 314, 315),
eine Bewegungsvorrichtung (104, 204, 304), die mechanisch mit den Anzeigeeinheiten (101 - 103, 201, 202, 301 - 303, 314, 315) gekoppelt ist und eine Stange und eine Vielzahl von einzelnen Armen (306, 307) jeweils für jede der Anzeigeeinheiten (101 - 103, 201, 202, 301 - 303, 314, 315) aufweist, die mit der Stange gekoppelt sind und die auf der Bewegungsvorrichtung (104, 204, 304) auf und ab bewegbar sind und die um die Bewegungsvorrichtung (104, 204, 304) über einen Winkel von 360° um die Stange drehbar ist, wobei jeder der mehreren einzelnen Arme (306, 307) als mechanischer Dreigelenkarm (306, 307) konfiguriert ist, der jeweils ein erstes Gelenk (320, 323), das mit der jeweiligen Anzeigeeinheit (301, 302, 303, 314, 315) gekoppelt ist, und ein Mittelgelenk (321, 324) aufweist, und ein zweites Gelenk (322, 325), das jeden einzelnen Arm mit der Bewegungsvorrichtung (304) koppelt,
eine Bewegungssteuerung (114), die konfiguriert ist, die Position und/oder Orientierung der einzelnen Anzeigeeinheiten (101 - 103, 201, 202, 301 - 303, 314, 315) durch Steuern der Bewegungsvorrichtung (104, 204, 304) basierend auf einem dreidimensionalen Modell (111) des dreidimensionalen Objekts (150) anzupassen, und
eine Bildsteuerung (105), die elektronisch mit den Anzeigeeinheiten (101 - 103, 201, 202, 301 - 303, 314, 315) gekoppelt und konfiguriert ist, um einen Ausschnitt eines Bildes (112) des dreidimensionalen Objekts (150) auf jeder der Anzeigeeinheiten (101 - 103, 201, 202, 301 - 303, 314, 315) anzuzeigen.

2. Anzeigesystem (100, 200, 300) gemäß Anspruch 1, wobei die Bewegungssteuerung (114) konfiguriert ist, um für einen Ausschnitt des dreidimensionalen Modells (111), der dem durch eine jeweilige der Anzeigeeinheiten (101 - 103, 201, 202, 301 - 303, 314, 315) repräsentierten Ausschnitt entspricht, eine durchschnittliche Orientierung zu berechnen und die Bewegungsvorrichtung (104, 204, 304) zu steuern, um die jeweilige Anzeigeeinheit (101 - 103, 201, 202, 301 - 303, 314, 315) entsprechend zu positionieren.

3. Anzeigesystem (100, 200, 300) gemäß einem der vorhergehenden Ansprüche, wobei die Anzeigeeinheiten (101 - 103, 201, 202, 301 - 303, 314, 315) Anzeigeeinheiten (101 - 103, 201, 202, 301 - 303, 314, 315) unterschiedlicher Größe aufweist.

4. Anzeigesystem (100, 200, 300) gemäß einem der vorhergehenden Ansprüche, wobei die Bildsteuerung (105) konfiguriert ist, um auf jeder der Anzeigeeinheiten (101 - 103, 201, 202, 301 - 303, 314, 315) den jeweiligen Ausschnitt des Bildes (112) des dreidimensionalen Objekts (150) anzuzeigen, der der Position der jeweiligen Anzeigeeinheit (101 - 103, 201, 202, 301 - 303, 314, 315) entspricht.

5. Anzeigesystem (100, 200, 300) nach einem der vorhergehenden Ansprüche, das eine Vorrichtung (113) zum Verfolgen einer Position der Augen eines Benutzers des Anzeigesystems (100, 200, 300) aufweist, wobei die Bildsteuerung (105) so konfiguriert ist, dass sie das angezeigte Bild (112) für jede Anzeigeeinheit (101 - 103, 201, 202, 301 - 303, 314, 315) gemäß der Position der Augen des Benutzers anpasst.

6. Anzeigesystem (100, 200, 300) gemäß einem der vorhergehenden Ansprüche, das einen Speicher (109) aufweist, der konfiguriert ist, um eine Vielzahl von dreidimensionalen Modellen (111) und/oder Bildern (112) der jeweiligen dreidimensionalen Objekte (150) zu speichern; und/oder
eine Kommunikationsschnittstelle (110) aufweist, die konfiguriert ist, um das dreidimensionale Modell (111) und/oder das Bild (112) des dreidimensionalen Objekts (150) zu empfangen.

7. Anzeigesystem (100, 200, 300) gemäß einem der vorhergehenden Ansprüche, das einen dreidimensionalen Scanner aufweist, der konfiguriert ist, um ein weiteres dreidimensionales Objekt (150) zu scannen und ein entsprechendes weiteres dreidimensionales Modell (111) bereitzustellen, und/oder
Kamerasystem, das konfiguriert ist, um ein weiteres Bild des weiteren dreidimensionalen Objekts (150) aufzunehmen.

8. Anzeigeverfahren zum Anzeigen eines dreidimensionalen Objekts (150), wobei das Anzeigeverfahren aufweist:
mechanisches Positionieren (S1) einer Mehrzahl von Anzeigeeinheiten (101 - 103, 201, 202, 301 - 303, 314, 315) gemäß einer Form eines dreidimensionalen Objekts (150), wobei das mechanische Positionieren (S1) ein Anpassen (S4) der Position und/oder Orientierung der Mehrzahl von Anzeigeeinheiten (101 - 103, 201, 202, 301 - 303, 314, 315) auf der Basis eines dreidimensionalen Modells (111) des dreidimensionalen Objekts (150) mit einer Vielzahl von einzelnen Armen (306, 307) für jede der Anzeigeeinheiten (101 - 103, 201, 202, 301 - 303, 314, 315), die mit einer Stange einer Bewegungsvorrichtung (104, 204, 304) gekoppelt sind und die an der Bewegungsvorrichtung (104, 204, 304) auf und ab bewegbar sind und der um die Bewegungsvorrichtung (104, 204, 304) drehbar sind und einen 360°-Winkel um die Stange abdeckt, wobei jeder der mehreren einzelnen Arme (306, 307) als mechanischer Dreigelenkarm (306, 307) konfiguriert ist, der jeweils ein erstes Gelenk (320, 323), das mit der jeweiligen Anzeigeeinheit (301, 302, 303, 314, 315) gekoppelt ist, und ein Mittelgelenk (321, 324) aufweist, sowie ein zweites Gelenk (322, 325), das jeden einzelnen Arm mit der Bewegungsvorrichtung (304) koppelt,
elektronisches Kontaktieren (S2) der Anzeigeeinheiten (101 - 103, 201, 202, 301 - 303, 314, 315), und
Anzeigen (S3) eines Ausschnitts eines Bildes (112) des dreidimensionalen Objekts (150) auf jeder der Anzeigeeinheiten (101 - 103, 201, 202, 301 - 303, 314, 315).

9. Anzeigeverfahren gemäß Anspruch 8, wobei die mechanische Positionierung die Berechnung (S5) einer durchschnittlichen Orientierung für einen Ausschnitt des dreidimensionalen Modells (111), der dem durch eine jeweilige der Anzeigeeinheiten (101 - 103, 201, 202, 301 - 303, 314, 315) repräsentierten Ausschnitt entspricht, und das entsprechende Positionieren der jeweiligen Anzeigeeinheit (101 - 103, 201, 202, 301 - 303, 314, 315) aufweist.

10. Anzeigeverfahren gemäß einem der vorhergehenden Ansprüche 8 und 9, wobei die Anzeigeeinheiten (101 - 103, 201, 202, 301 - 303, 314, 315) Anzeigeeinheiten (101 - 103, 201, 202, 301 - 303, 314, 315) unterschiedlicher Größe aufweisen; und/oder
wobei das Anzeigen das Anzeigen (S6) auf jeder der Anzeigeeinheiten (101 - 103, 201, 202, 301 - 303, 314, 315) des jeweiligen Ausschnitts des Bildes (112) des dreidimensionalen Objekts (150) aufweist, der der Position der jeweiligen Anzeigeeinheit (101 - 103, 201, 202, 301 - 303, 314, 315) entspricht.

11. Anzeigeverfahren nach einem der vorhergehenden Ansprüche 8 bis 10, dass eine Verfolgung (S7) einer Position der Augen eines Benutzers und das Anpassen des angezeigten Bildes (112) für jede Anzeigeeinheit (101 - 103, 201, 202, 301 - 303, 314, 315) gemäß der Position der Augen des Benutzers aufweist.

12. Anzeigeverfahren gemäß einem der vorhergehenden Ansprüche 8 bis 11, dass das Speichern einer Vielzahl von dreidimensionalen Modellen (111) und/oder Bildern (112) der jeweiligen dreidimensionalen Objekte (150) aufweist; und/oder
dass das Empfangen des dreidimensionalen Modells (111) und/oder des Bildes (112) des dreidimensionalen Objekts (150) über eine Kommunikationsschnittstelle (110) aufweist.

13. Anzeigeverfahren gemäß einem der vorangehenden Ansprüche 8 bis 12, dass das Abtasten eines weiteren dreidimensionalen Objekts (150) und das Bereitstellen eines entsprechenden weiteren dreidimensionalen Modells (111) aufweist, und/oder
dass das Aufnehmen eines Bildes des weiteren dreidimensionalen Objekts (150) aufweist.

## Revendications

1. Système d'affichage (100, 200, 300) pour afficher un objet tridimensionnel (150), le système d'affichage (100, 200, 300) comprenant :
une pluralité d'unités d'affichage (101 - 103, 201, 202, 301 - 303, 314, 315),
un dispositif de déplacement (104, 204, 304), qui est couplé mécaniquement aux unités d'affichage (101-103, 201, 202, 301-303, 314, 315) et qui comprend un mât et une pluralité de bras individuels (306, 307), chacun pour chacune des unités d'affichage (101-103, 201, 202, 301-303, 314, 315) qui est couplé au mât et qui est mobile vers le haut et vers le bas sur le dispositif de déplacement (104, 204, 304) et qui peut tourner autour du dispositif de déplacement (104, 204, 304) couvrant un angle de 360° autour du pôle, dans lequel chacun de la pluralité de bras uniques (306, 307) est configuré comme un bras mécanique à trois articulations (306, 307), chacun comprenant une première articulation (320, 323) couplée à l'unité d'affichage respective (301, 302, 303, 314, 315), et une articulation centrale (321, 324), et une seconde articulation (322, 325) qui couple chaque bras unique au dispositif de mouvement (304),
un contrôleur de mouvement (114), qui est configuré pour adapter la position et/ou l'orientation des unités d'affichage individuelles (101-103, 201, 202, 301-303, 314, 315) en commandant le dispositif de mouvement (104, 204, 304) sur la base d'un modèle tridimensionnel (111) de l'objet tridimensionnel (150), et
un contrôleur d'image (105), qui est électroniquement couplé aux unités d'affichage (101 - 103, 201, 202, 301 - 303, 314, 315) et est configuré pour afficher une section d'une image (112) de l'objet tridimensionnel (150) sur chacune des unités d'affichage (101 - 103, 201, 202, 301 - 303, 314, 315).

2. Système d'affichage (100, 200, 300) selon la revendication 1, dans lequel le contrôleur de mouvement (114) est configuré pour calculer pour une section du modèle tridimensionnel (111) qui correspond à la section représentée par une unité respective des unités d'affichage (101 - 103, 201, 202, 301 - 303, 314, 315) une orientation moyenne, et commander le dispositif de mouvement (104, 204, 304) pour positionner l'unité d'affichage respective (101 - 103, 201, 202, 301 - 303, 314, 315) en conséquence.

3. Système d'affichage (100, 200, 300) selon l'une quelconque des revendications précédentes, dans lequel les unités d'affichage (101 - 103, 201, 202, 301 - 303, 314, 315) comprennent des unités d'affichage (101 - 103, 201, 202, 301 - 303, 314, 315) de tailles différentes.

4. Système d'affichage (100, 200, 300) selon l'une quelconque des revendications précédentes, dans lequel le contrôleur d'image (105) est configuré pour afficher sur chacune des unités d'affichage (101 - 103, 201, 202, 301 - 303, 314, 315) la section respective de l'image (112) de l'objet tridimensionnel (150) qui correspond à la position de l'unité d'affichage respective (101 - 103, 201, 202, 301 - 303, 314, 315).

5. Système d'affichage (100, 200, 300) selon l'une quelconque des revendications précédentes, comprenant un dispositif de suivi (113) qui est configuré pour suivre une position des yeux d'un utilisateur du système d'affichage (100, 200, 300), dans lequel le contrôleur d'image (105) est configuré pour adapter l'image affichée (112) pour chaque unité d'affichage (101 - 103, 201, 202, 301 - 303, 314, 315) selon la position des yeux de l'utilisateur.

6. Système d'affichage (100, 200, 300) selon l'une quelconque des revendications précédentes, comprenant une mémoire (109) configurée pour stocker une pluralité de modèles tridimensionnels (111) et/ou d'images (112) des objets tridimensionnels respectifs (150) ; et/ou comprenant une interface de communication (110) configurée pour recevoir le modèle tridimensionnel (111) et/ou l'image (112) de l'objet tridimensionnel (150).

7. Système d'affichage (100, 200, 300) selon l'une quelconque des revendications précédentes, comprenant un scanner tridimensionnel, qui est configuré pour scanner un autre objet tridimensionnel (150) et fournir un autre modèle tridimensionnel (111) respectif, et/ou un système de caméra, qui est configuré pour enregistrer un modèle tridimensionnel (111) et/ou une image (112) de l'objet tridimensionnel (150).
un système de caméra, qui est configuré pour enregistrer une autre image de l'autre objet tridimensionnel (150).

8. Méthode d'affichage pour afficher un objet tridimensionnel (150), la méthode d'affichage comprenant :
le positionnement mécanique (S1) d'une pluralité d'unités d'affichage (101-103, 201, 202, 301-303, 314, 315) selon une forme d'un objet tridimensionnel (150), dans lequel le positionnement mécanique (S1) comprend l'adaptation (S4) de la position et/ou de l'orientation de la pluralité d'unités d'affichage (101-103, 201, 202, 301-303, 314, 315) sur la base d'un modèle tridimensionnel (111) de l'objet tridimensionnel (150) avec une pluralité de bras uniques (306, 307), chacun pour chacune des unités d'affichage (101-103, 201, 202, 301-303, 314, 315) qui est couplé à un poteau d'un dispositif de mouvement (104, 204, 304) et qui est mobile vers le haut et vers le bas sur le dispositif de mouvement (104, 204, 304) et qui est rotatif autour du dispositif de mouvement (104, 204, 304) couvrant un angle de 360° autour du poteau, dans lequel chacun de la pluralité de bras uniques (306, 307) est configuré comme un bras mécanique à trois articulations (306, 307), chacun comprenant une première articulation (320, 323) couplée à l'unité d'affichage respective (301, 302, 303, 314, 315), et une articulation centrale (321, 324), et une seconde articulation (322, 325) qui couple chaque bras unique au dispositif de mouvement (304),
la mise en contact électronique (S2) des unités d'affichage (101-103, 201, 202, 301-303, 314, 315), et
afficher (S3) une section d'une image (112) de l'objet tridimensionnel (150) sur chacune des unités d'affichage (101 à 103, 201, 202, 301 à 303, 314, 315).

9. Méthode d'affichage selon la revendication 8, dans laquelle le positionnement mécanique comprend le calcul (S5) d'une orientation moyenne pour une section du modèle tridimensionnel (111) qui correspond à la section représentée par l'une respective des unités d'affichage (101 - 103, 201, 202, 301 - 303, 314, 315) et le positionnement de l'unité d'affichage respective (101 - 103, 201, 202, 301 - 303, 314, 315) en conséquence.

10. Méthode d'affichage selon l'une quelconque des revendications précédentes 8 et 9, dans laquelle les unités d'affichage (101 - 103, 201, 202, 301 - 303, 314, 315) comprennent des unités d'affichage (101 - 103, 201, 202, 301 - 303, 314, 315) de tailles différentes ; et/ou
dans lequel l'affichage comprend l'affichage (S6) sur chacune des unités d'affichage (101 à 103, 201, 202, 301 à 303, 314, 315) de la section respective de l'image (112) de l'objet tridimensionnel (150) qui correspond à la position de l'unité d'affichage respective (101 à 103, 201, 202, 301 à 303, 314, 315).

11. Méthode d'affichage selon l'une quelconque des revendications précédentes 8 à 10, comprenant le suivi (S7) d'une position des yeux d'un utilisateur, et l'adaptation de l'image affichée (112) pour chaque unité d'affichage (101 - 103, 201, 202, 301 - 303, 314, 315) en fonction de la position des yeux de l'utilisateur.

12. Méthode d'affichage selon l'une quelconque des revendications précédentes 8 à 11, comprenant le stockage d'une pluralité de modèles tridimensionnels (111) et/ou d'images (112) des objets tridimensionnels respectifs (150) ; et/ou
recevoir le modèle tridimensionnel (111) et/ou l'image (112) de l'objet tridimensionnel (150) via une interface de communication (110).

13. Méthode d'affichage selon l'une quelconque des revendications précédentes 8 à 12, comprenant la numérisation d'un autre objet tridimensionnel (150) et la fourniture d'un autre modèle tridimensionnel respectif (111), et/ou
l'enregistrement d'une image de l'autre objet tridimensionnel (150).
